# EUROPÄISCHE PATENTSCHRIFT

(11) **EP 1 164 876 B1**
(45) Veröffentlichungstag und Bekanntmachung des Hinweises auf die Patenterteilung: **13.11.2002**
(21) Anmeldenummer: 00901475.4
(22) Anmeldetag: 10.02.2000
(51) Int. Cl.: A23N 17/00, A23K 3/03, A23K 3/00

(54) **VERFAHREN UND VORRICHTUNG ZUR HYGIENISIERENDEN, THERMISCHEN BEHANDLUNG VON MEHL**
METHOD AND DEVICE FOR THERMALLY TREATING FLOUR FOR HYGIENIC PURPOSES
PROCEDE ET DISPOSITIF DE TRAITEMENT THERMIQUE DE FARINE A DES FINS D'HYGIENE

(30) Priorität: 08.04.1999 DE 19915908
(43) Veröffentlichungstag der Anmeldung: 02.01.2002
(73) Patentinhaber: BÜHLER AG, 9240 Uzwil (CH)
(72) Erfinder: WUEST, Urs, CH-9302 Kronbuehl (CH); WETZEL, Willi, CH-9244 Niederuzwil (CH)
(74) Vertreter: Frommhold, Joachim, Dr.
(86) Internationale Anmeldenummer: CH0000076
(87) Internationale Veröffentlichungsnummer: WO00060958

(56) Entgegenhaltungen:
- EP-A- 0 257 996
- EP-A- 0 923 877
- WO-A-98/43682
- FR-A- 2 729 828
- FR-A- 2 731 589
- FR-A- 2 769 798
- IE-A- 930 995
- PATENT ABSTRACTS OF JAPAN vol. 1996, no. 05, 31. Mai 1996 (1996-05-31) & JP 08 009893 A (KEISUKE TABEI), 16. Januar 1996 (1996-01-16)
- DATABASE WPI Section Ch, Week 198026 Derwent Publications Ltd., London, GB; Class C03, AN 1980-45984C XP002136471 & SU 697 127 A (GEOR ZOO VET TRAING), 18. November 1979 (1979-11-18)

## Beschreibung

Die Erfindung betrifft ein Verfahren zur hygienisierenden, thermischen Behandlung von Mehl und dergleichen schüttfähigen Nahrungs- und Futtermitteln nach dem Oberbegriff des Anspruchs 1 sowie eine Vorrichtung hierzu. Insbesondere betrifft die Erfindung die thermische Behandlung von Futtermehl.

Verfahren zur Hygienisierung oder Sterilisierung von Pellets oder mehlförmigen Stoffen, die als Nahrungs- und/oder Futtermittel verwendet werden, sind bekannt. Hierzu erfolgt eine ausreichende thermische und/oder hydrothermische Behandlung zum abtöten von Keimen oder zumindest deren Inaktivierung. Dieser Behandlung folgt ein Kühlen nach. Bei kontinuierlicher Verfahrensführung ergeben sich unterschiedliche Verweilzeiten sowie ungleiche Bedingungen am Anfang und am Ende des Behandlungsprozesses.

Die WO98/43682 beinhaltet ein batchweises Verfahren zum sterilisieren von Granulat und dergleichen, bei welchem das Produkt mittels Dampf in einer Kammer eines Mischaggregates auf eine Sterilisierungstemperatur erwärmt wird. Nach dieser Erwärmung gelangt das Produkt in eine zweite, darunterliegende Kammer, in der es bis zum Austrag einer Verweilzeit unterliegt. Die Wärmebehandlung des Produktes erfolgt in fluidisiertem Zustand. Beide Kammern sind durch schliessbare Austragsöffnungen voneinander getrennt. Das Volumen der zweiten Kammer ist grösser als jenes der ersten Kammer.

Gemäss der EP-B-219471 besteht das Mischaggregat aus einer Mischkammer mit rotierenden Mischflügeln sowie einer Vernebelungseinrichtung in Form einer rotierenden Wurfrolle.

Nach der EP-B-210966 kann ein solcher Mischer auch Mittel zur seitlichen Zuführung eines Kühi- oder Trocknungsmittels aufweisen.

Die JP-08009893 (Abstract) offenbart die Herstellung von Tierfutter mittels Sterilisierung der Rohstoffe bei ca. 80-90°C, Trocknung der sterifisierten Rohstoffe auf einen Wassergehalt von 30-40% und Beimischung von Zusatzstoffen. Dem folgt ein dreitägiger Fermentationsprozess. Nach der weiterhin bekannten SU-697127 (Abstract) werden gemahlene Soja-Bohnen auf ca. 70-100°C erhöht und es werden z.B. Cerealien beigemischt. Weiterhin können Fette, Spurenelemente und Proteine u.a. hinzugefügt werden, so dass eine pastöse Mixtur entsteht, die nachfolgend bei ca. 20-25°C auf einen Feuchtegehalt von 5-12% getrocknet wird.

Es kann weiterhin auch als bekannt angesehen werden, derartige Aggregate mit weiteren Kühl- und Trocknungseinrichtungen sowie Filtern zu versehen, wobei die Lösungsansätze von starren und damit unfiexiblen Kombinationen ausgehen, da zumeist von kontinuierlichem Betrieb und grossen Mengen an Produkt ausgegangen wird. Die vorgenannten Aggregate weisen meist lange-Schrägen und Übergänge auf, was zu Förderproblemen und Temperaturdifferenzen führen kann.

Der Erfindung liegt nun die Aufgabe zugrunde, eine Vorrichtung zur hygienisierenden thermischen Behandlung von Mehl, insbesondere zur thermischen Behandlung von Futtermehl zu schaffen, die die Nachteile des Standes der Technik vermeidet und eine effiziente Behandlung auch kleiner Chargen ermöglicht. Die Lösung dieser Aufgabe erfolgt mit den kennzeichnenden Merkmalen des Anspruchs 1.

Vorteilhafte Ausgestaltungen sind in den Unteransprüchen offenbart.

Eine weitere Aufgabe besteht in der Entwicklung eines Verfahrens zur hygienisierenden thermischen Behandlung von Mehl, insbesondere Futtermehl gemäss Anspruch 4.

Der Kerngedanke der Erfindung besteht darin, zunächst in Anlehnung an den Stand der Technik eine thermische Behandlung z. B. von Futtermehlen in einem Mischer, vorzugsweise einem Batchmischer durchzuführen, das behandelte Produkt anschliessend zu Trocknen und zu Kühlen und erst nachfolgend in einem weiteren Mischer empfindliche Zusatzstoffe zuzuführen und einzumischen.

Dies ermöglicht nicht nur eine Anpassung an unterschiedliche Chargengrössen, sondern es wird auch Kondens vermieden und die Zusatzstoffe werden bei der thermischen Behandlung nicht geschädigt. Letzteres ermöglicht auch, solche Zusatzstoffe wie z.B. Antibiotika in geringeren Mengen zuzugeben. Die zugehörige Vorrichtung kann modulartig errichtet werden, es besteht eine hohe Gestaltungsvarianz.

Zwar ermöglicht auch die Offenbarung der IE-A-930995 die Herstellung von Tierfutter durch Mischen und Expandieren mit batchweisen Abschnitten, doch ist der Aufwand wesentlich höher. So müssen die Rohstoffe aus Silos zunächst auf einer Wägeplattform bereitgestellt werden und gelangen in eine Vermahlungszone. Auf die Zerkleinerung folgt die Zugabe von Additiven, ein Sieben und dann erst ein Mischen, dann evtl. noch die Zugabe von weiteren Stoffen, ein Konditionieren, Expandieren, Pelletieren und Kühlen der Pellets.

Das erfindungsgemässe Verfahren gestattet sehr kurzfristige Umstellungen bzw. Produktwechsef und sichere, thermische Bedingungen ohne Kondensgefahr, so dass eine wesentliche Quelle von Kontamination ausgeschaltet wird.

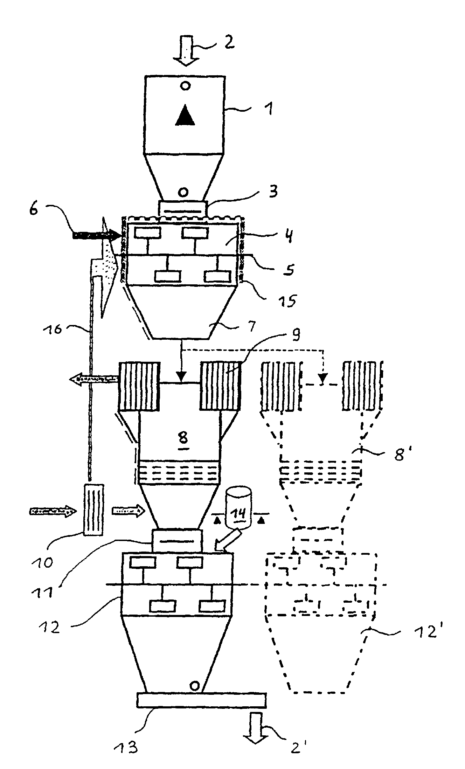

Die Erfindung wird nachfolgend in einem Ausführungsbeispiel an Hand einer Zeichnung näher beschrieben. in der Zeichnung zeigt die einzige Figur eine Prinzipdarstellung einer Vorrichtung zur thermischen, hygienisierenden Behandlung von Futtermehlen.

Die Vorrichtung weist ein Depot 1 auf, in welches das zu behandelnde Produkt (Futtermehl) eingefüllt wird. Über ein Klappensystem 3 ist das Depot 1 mit einem Mischer 4 verbunden, wobei das Klappensystem 3 eine luftdichte Abschottung zwischen Depot 1 und Mischer 4 ermöglicht.

Der Mischer 4 ist ein Batchmischer, bevorzugt ausgeführt gemäss der CH 1333/94 bzw. der EP-A-685 255, mit einer Mischerwelle 5 mit Mischflügeln sowie einer Einrichtung zur Dampfzugabe 6.

Der Produktauslass 7 des Mischers 4 ist mit einem Trockner/Kühler 8 verbunden, der mit einem Filter 9 zur Abluftreinigung versehen ist. Ebenso vorgesehen ist ein Heizregister 10. Es kann sowohl Heissluft zum Trocknen des Produktes als auch Kühlluft erzeugt werden.

Über ein weiteres Klappensystem 11 ist der Trockner/Kühler 8 mit einem weiteren Batchmischer 12 verbunden, welcher analog zum Batchmischer 4 aufgebaut ist. Am Produktauslass des Batchmischers 12 ist eine Austragsvorrichtung, z.B. eine Austragsschnecke 13 zum Austrag des behandelten Futtermehls 2' vorgesehen.

Der Batchmischer 12 weist weiterhin eine Einrichtung 14 zur Zugabe fester oder flüssiger und hitzeempfindlicher Stoffe auf, die Düsenstäbe aufweist. Derartige Einrichtungen sind in der nicht vorveröffentlichten Deutschen Patentanmeldung P19904994.7 der Anmelderin beschrieben und sie können auch Kleinkomponentenwaagen oder dergleichen beinhalten.

Zur Erhöhung der Kapazität der Vorrichtung können Trockner/Kühler 8' und/oder Batchmischer 12' parallelgeschaltet werden.

Der Batchmischer 4 weist zudem eine Heizung 15 auf und durch eine entsprechende Heizungsführung 16 kann das ganze System mit Heissluft hygienisiert werden oder es kann mit Kühlluft gereinigt werden. Dies gewährleistet eine hohe Sanitation, kurze Reinigungszeiten und schnellen Produktwechsel. Die produktführenden Teile der Vorrichtung weisen schräge und damit wenig verschmutzbare Flächen auf (zugleich geringste Verschleppungsgefahr).

Das zu behandelnde Futtermehl 2 gelangt zunächst in das Depot 1 und über das schleusenartige Klappensystem 3 in den Batchmischer 4. Dort erfolgt eine Aufheizung des Produktes 2, was durch die Durchmischung des Produktes 2 durch Mischflügel der Mischerwelle 5 beschleunigt wird (kurze Verweilzeit), wobei eine hohe Gleichmässigkeit der Konditionierung erreicht wird. Die einzustellende Heiztemperatur hängt vom gewünschten Hygienisierungsgrad und anderen Faktoren ab.

Durch das nachfolgende Trocknen und Kühlen im separaten Trockner/Kühler 8 wird nicht nur eine Kondensbildung weitgehend vermieden, sondern im Batchmischer 4 kann bereits die nächste Charge behandelt werden. Entsprechende, nicht dargestellte Abschliessvorrichtungen zwischen den einzelnen Komponenten sind vorgesehen.

Produktstaub gelangt in den Filter 9 und die gereinigte Abluft kann an die Umgebung abgegeben werden oder im Umluftbetrieb erneut verwendet werden. Die Steuerung erfolgt so, dass der anfallende Filterstaub wieder in die verarbeitete Charge des Produktes Futtermehl 2 zurückgeführt wird, ohne die Gefahr einer Verschleppung.

Im Batchmischer 12 erfolgt dann die Zugabe erforderlicher Zusatzstoffe zum gekühlten und getrockneten Produkt 2' sowie nachfolgend dessen Austrag mittels der Austragsschnecke 13.

### Kurzzeichen

- 1: Depot
- 2: Futtermehl
- 2': Futtermehl
- 3: Klappensystem
- 4: Batchmischer
- 5: Mischerwelle
- 6: Dampfzugabe
- 7: Produktauslass
- 8: Trockner/Kühler
- 8': Trockner/Kühler
- 9: Filter
- 10: Heizregister
- 11: Klappensystem
- 12: Batchmischer
- 12': Batchmischer
- 13: Austragsschnecke
- 14: Einrichtung
- 15: Heizung
- 16: Heizungsführung

## Patentansprüche

1. Vorrichtung zur hygienisierenden, thermischen Behandlung von Mehl, insbesondere von Futtermehl oder dergleichen Schüttgüter aufweisend einen beheizbaren Mischer, Trocknungs- und Kühleinrichtungen, Filter und Austragseinrichtungen, **dadurch gekennzeichnet, dass**
- der beheizbare Mischer ein Batchmischer (4) ist, der mittels eines schleusenartigen Klappensystems (3) mit einem Trockner/Kühler (8) verbunden ist und
- der Trockner/Kühler (8) über ein weiteres Klappensystem (11) mit einem zweiten Batchmischer (12) verbunden ist, der Einrichtungen zur Zugabe von Zusatzstoffen aufweist.

2. Vorrichtung nach Anspruch 1, **dadurch gekennzeichnet, dass** der Batchmischer (12) eine Einrichtung (14) mit Düsenstäben aufweist.

3. Vorrichtung nach einem der Ansprüche 1 oder 2, **dadurch gekennzeichnet, dass** eine Heizungsführung (16) eines Heizregisters (10) vorgesehen ist, zur Hygienisierung oder Reinigung der Vorrichtung.

4. Vorrichtung nach einem der Ansprüche 1 bis 3, **dadurch gekennzeichnet, dass** ein weiterer Trockner/Kühler (8') und/oder Batchmischer (12), unabhängig wirkend vorgesehen ist.

5. Verfahren zur hygienisierenden, thermischen Behandlung von Mehl, insbesondere von Futtermehl oder dergleichen Schüttgüter durch Aufheizung von Schüttgut in einem Mischer, gefolgt von einer Trocknung und Kühlung, **dadurch gekennzeichnet, dass** die Aufheizung sowie Trocknung und Kühlung batchweise erfolgen und das Aufheizen in einem Batchmischer (4) und das Trocknen/Kühlen in einem hiervon getrennten Trockner/Kühler (8) erfolgen und dem getrockneten und gekühlten Schüttgut in einem nachgeordneten, zweiten Batchmischer (12) Zusatzstoffe beigemischt werden, wobei Batchmischer (4) und der Trockner/Kühler (8) als ganzes System mit Heissluft hygienisiert und/oder mit Kühlluft gereinigt werden.

6. Verfahren nach Anspruch 5, **dadurch gekennzeichnet, dass** verschiedene Chargen an Schüttgut gleichzeitig und unabhängig voneinander thermisch behandelt werden.

## Claims

1. An apparatus for the hygienizing thermal treatment of flour, especially middlings or similar bulk materials, comprising a heatable mixer, drying and cooling devices, filter and discharge devices, **characterized in that**
- the heatable mixer is a batch mixer (4) which is connected with a dryer/cooler (8) by means of a sluice-like flap system (3), and
- the dryer/cooler (8) is connected via a further flap system (11) with a second batch mixer (12) which is provided with devices for adding additives.

2. An apparatus as claimed in claim 1, **characterized in that** the batch mixer (12) comprises a device (14) with nozzle bars.

3. An apparatus as claimed in one of the claims 1 or 2, **characterized in that** a heating guidance (16) of a heating register (10) is provided for hygienizing or cleaning the apparatus.

4. An apparatus as claimed in one of the claims 1 to 3, **characterized in that** a further dryer/cooler (8') and/or batch mixer (12) are provided which act independently.

5. A method for the hygienizing thermal treatment of flour, especially middlings or similar bulk materials, by heating of the bulk material in a mixer, followed by drying and cooling, **characterized in that** the heating as well as the drying and cooling is performed in batches and the heating is performed in a batch mixer (4) and the drying/cooling in a dryer/cooler (8) separated therefrom and the dried and cooled bulk material is admixed with additives in a downstream second batch mixer (12), with the batch mixer (4) and the dryer/cooler (8) being hygienized as an entire system with hot air and/or cleaned with cool air.

6. A method as claimed in claim 5, **characterized in that** different batches of bulk material are thermally treated simultaneously and independent from one another.

## Revendications

1. Dispositif pour le traitement d'hygiénisation thermique de farine, plus particulièrement de farine fourragère ou d'autres produits en vrac similaires, comprenant un malaxeur chauffant, des installations de séchage et de réfrigération, des filtres et des installations de déversement, **caractérisé en ce que**
- le malaxeur chauffant est un malaxeur travaillant par lots (4) qui est relié à un séchoir/réfrigérant (8) au moyen d'un système de vannes (3) du genre écluse et
- que le séchoir/réfrigérant (8) est relié par un autre système de vannes (11) à un second malaxeur travaillant par lots (12) qui est pourvu d'installations destinées au rajout d'additifs.

2. Dispositif selon la revendication 1, **caractérisé en ce que** le malaxeur travaillant par lots (12) est pourvu d'une installation (14) munie de barres porte-buses.

3. Dispositif selon l'une des revendications 1 ou 2, **caractérisé en ce qu'**un contrôle de chauffage (16) d'un registre de chauffage (10) est prévu à des fins d'hygiénisation ou de nettoyage du dispositif.

4. Dispositif selon l'une des revendications 1 à 3, **caractérisé en ce qu'**un séchoir/réfrigérant (8') et/ou un malaxeur travaillant par lots (12) supplémentaires sont prévus, tous deux travaillant de manière autonome.

5. Procédé pour le traitement d'hygiénisation thermique de farine, plus particulièrement de farine fourragère ou d'autres produits en vrac, consistant à chauffer le vrac dans un malaxeur, puis à le sécher et à le refroidir, **caractérisé en ce que** le chauffage ainsi que le séchage et le refroidissement se font par lots et que le chauffage se fait dans un malaxeur travaillant par lots (4) et le séchage/refroidissement dans un séchoir/réfrigérant (8) séparé et que l'on rajoute, dans un deuxième malaxeur travaillant par lots (12) monté en aval, au vrac séché et refroidi des additifs, le malaxeur travaillant par lots (4) et le séchoir/réfrigérant (8) étant hygiénisés à l'air chaud et/ou nettoyés à l'air de réfrigération en tant que système complet.

6. Procédé selon la revendication 5, **caractérisé en ce que** différentes charges de produits en vrac sont traitées thermiquement en même temps et indépendamment les unes des autres.
